# EUROPEAN PATENT APPLICATION

(11) **EP 3 537 615 A1**
(43) Date of publication of application: **11.09.2019**
(21) Application number: 19153946.9
(22) Date of filing: 28.01.2019
(51) Int. Cl.: H04B 5/00

(54) **NOTIFICATION METHOD AND SYSTEM FOR BATTERY PICK-UP**

(30) Priority: 08.03.2018 TW 10707874
(71) Applicant: Kwang Yang Motor Co., Ltd., Kaohsiung City 80794 (TW)
(72) Inventor: LIN, Chen-Sheng, 80794 Kaohsiung (TW); TENG, Hsin-Liang, 82053 Kaohsiung City (TW); CHUANG, Po-Yu, 11501 Tapei City (TW); LIN, Jen-Chiun, 11501 Tapei City (TW); CHEN, Yuh-Rey, 11501 Tapei City (TW); LIU, Te-Chuan, 11501 Tapei City (TW)
(74) Representative: Brevalex

(57) **Abstract**

A notification method is implemented by a notification system for battery pick-up, and includes: A) detecting a concerned battery identifier of a battery (4) to be charged; B) determining one of plural sets of reference battery data corresponding to one of reference battery identifiers that matches the concerned battery identifier, and charging the battery (4); and C) transmitting, when it is determined that the battery (4) has been fully charged, a pick-up notification to a target of notification transmission that is indicated by a user end target receiver code of said one of the plural sets of reference battery data determined in step B).

## Description

The disclosure relates to a notification method and a notification system, and more particularly to a notification method for battery pick-up and a notification system for battery pick-up.

It usually takes around three to four hours to fully charge a battery of an electric vehicle at a charging station. At present, if a user wishes to utilize this time to attend to business elsewhere, the user may not know whether the battery has been fully charged unless an inquiry into the progress of battery charging is made. Therefore, a more efficient way to inform the user of the progress of battery charging is demanded.

Therefore, an object of the disclosure is to provide a notification method for battery pick-up and a notification system for battery pick-up that can alleviate at least one of the drawbacks of the prior art.

According to a first aspect of the disclosure, the notification method is to be implemented by a notification system for battery pick-up. The notification system stores plural sets of reference battery data and a plurality of reference battery identifiers, each of which corresponds to a respective one of the plural sets of reference battery data. Each of the plural sets of reference battery data includes a user end target receiver code which indicates a target of notification transmission. The method includes:
A) detecting, by the notification system, a concerned battery identifier of a battery to be charged;
B) by the notification system, determining one of the plural sets of reference battery data corresponding to one of the reference battery identifiers that matches the concerned battery identifier, and charging the battery; and
C) transmitting, by the notification system when it is determined that the battery has been fully charged, a pick-up notification to the target of notification transmission that is indicated by the user end target receiver code of said one of the plural sets of reference battery data determined in step B).

According to a second aspect of the disclosure, the notification method is to be implemented by a notification system for battery pick-up. The notification system includes a server, and a charging station communicable with the server via a communication network. The server stores plural sets of reference battery data, a plurality of reference entrustment identifiers, and a plurality of reference battery identifiers, each of which corresponds to a respective one of the plural sets of reference battery data and to a respective one of the reference entrustment identifiers. Each of the plural sets of reference battery data includes a user end target receiver code which indicates a user end electronic device as a target of notification transmission. The notification method includes:
by the user end electronic device, transmitting a concerned entrustment identifier to an entrusted end electronic device;
by the charging station, detecting a concerned battery identifier of a battery to be charged and the concerned entrustment identifier of the entrusted end electronic device, and transmitting the concerned battery identifier and the concerned entrustment identifier to the server;
by the server, determining whether the concerned entrustment identifier matches one of the reference entrustment identifiers stored in the server and whether the concerned battery identifier matches one of the reference battery identifiers stored in the server;
by the server, transmitting, when it is determined that the concerned entrustment identifier matches one of the reference entrustment identifiers and that the concerned battery identifier matches one of the reference battery identifiers, a charging instruction to the charging station so as to enable the charging station to charge the battery; and
by the server, transmitting, when it is determined by the server that the battery has been fully charged, a pick-up notification to the user end electronic device that is indicated by the user end target receiver code of one of the plural sets of reference battery data corresponding to said one of the reference battery identifiers with which the concerned battery identifier is determined to match.

According to a third another aspect of the disclosure, the notification system includes a server and a charging station. The server is configured to store plural sets of reference battery data and a plurality of reference battery identifiers, each of which corresponds to a respective one of the plural sets of reference battery data. Each of the plural sets of reference battery data includes a user end target receiver code which indicates a target of notification transmission. The charging station is communicable with the server via a communication network, and is configured to detect a concerned battery identifier of a battery to be charged, and to transmit the concerned battery identifier to the server. The server is configured to determine one of the plural sets of reference battery data corresponding to one of the reference battery identifiers that matches the concerned battery identifier, to control the charging station to charge the battery, and to transmit, when it is determined by the server that the battery has been fully charged, a pick-up notification to the target of notification transmission that is indicated by the user end target receiver code of said one of the plural sets of reference battery data corresponding to said one of the reference battery identifiers with which the concerned battery identifiers is determined to match.

According to a fourth aspect of the disclosure, the notification system includes a server and a charging station. The server configured to store plural sets of reference battery data, a plurality of reference battery identifiers, plural sets of reference registration data and a plurality of reference registered end identifiers. Each of said plurality of reference battery identifiers corresponds to a respective one of the plural sets of reference battery data. Each of the plural sets of reference battery data includes a user end target receiver code which indicates a target of notification transmission. Each of said plurality of reference registered end identifiers corresponds to a respective one of the plural sets of reference registration data. Each of the plural sets of reference registration data includes a registered end target receiver code which indicates a target of notification transmission. The charging station is communicable with the server via a communication network, and is configured to detect a concerned battery identifier of a battery to be charged and a concerned registered end identifier, and to transmit the concerned battery identifier and the concerned registered end identifier to the server. The server is configured to determine one of the plural sets of reference battery data corresponding to one of the reference battery identifiers that matches the concerned battery identifier, and one of the plural sets of reference registration data corresponding to one of the reference registered end identifiers that matches the concerned registered end identifier. The server is configured to control the charging station to charge the battery based on said one of the plural sets of reference battery data thus determined and said one of the plural sets of reference registration data thus determined. The server is configured to transmit, based on said one of the plural sets of reference battery data thus determined and said one of the plural sets of reference registration data thus determined, a confirmation notification to the targets of notification transmission that are respectively indicated by the user end target receiver code included in said one of the plural sets of reference battery data and the registered end target receiver code included in said one of the plural sets of reference registration data.

According to a fifth aspect of the disclosure, the notification system includes a server and a charging station. The server is communicable with a plurality of user end electronic devices via a communication network. The server is configured to store plural sets of reference battery data, a plurality of reference battery identifiers, and a plurality of candidate lists that are respectively provided by the user end electronic devices. Each of said plurality of reference battery identifiers corresponds to a respective one of the plural sets of reference battery data. Each of the plural sets of reference battery data includes a user end target receiver code which indicates a target of notification transmission that is a respective one of the user end electronic devices. Each of the reference battery identifiers corresponds to a respective one of the candidate lists. Each of the candidate lists includes a plurality of reference device identifiers that correspond respectively to the entrusted end electronic devices. One of the user end electronic devices enables the server to mark one of the reference device identifiers included in a corresponding one of the candidate lists. The charging station is communicable with the server via the communication network. The charging station is configured to detect a concerned battery identifier of a battery to be charged and a concerned device identifier of one of the entrusted end electronic devices, and to transmit the concerned battery identifier and the concerned device identifier to the server. The server is configured to determine one of the reference device identifiers that has been marked and that matches the concerned device identifier, to transmit a charging instruction to the charging station so as to enable the charging station to charge the battery, and to transmit, when it is determined by the server that the battery has been fully charged, a pick-up notification to the target of notification transmission that is indicated by the user end target receiver code of one of the plural sets of reference battery data corresponding to one of the reference battery identifiers with which the concerned battery identifiers matches.

According to a sixth aspect of the disclosure, the notification system includes a server and a charging station. The server is configured to store plural sets of reference battery data, a plurality of reference entrustment identifiers, and a plurality of reference battery identifiers, each of which corresponds to a respective one of the plural sets of reference battery data and to a respective one of the reference entrustment identifiers. Each of the plural sets of reference battery data includes a user end target receiver code which indicates a user end electronic device as a target of notification transmission. The user end electronic device transmits a concerned entrustment identifier to an entrusted end electronic device. The charging station is communicable with the server via a communication network, and is configured to detect a concerned battery identifier of a battery to be charged and the concerned entrustment identifier of the entrusted end electronic device, and to transmit the concerned battery identifier and the concerned entrustment identifier to the server. The server is further configured to determine whether the concerned entrustment identifier matches one of the reference entrustment identifiers stored in the server and whether the concerned battery identifier matches one of the reference battery identifiers stored in the server, to transmit, when it is determined by the server that the concerned entrustment identifier matches one of the reference entrustment identifiers and that the concerned battery identifier matches one of the reference battery identifiers, a charging instruction to the charging station so as to enable the charging station to charge the battery, and to transmit, when it is determined by the server that the battery has been fully charged, a pick-up notification to the user end electronic device that is indicated by the user end target receiver code of one of the plural sets of reference battery data corresponding to said one of the reference battery identifiers with which the concerned battery identifier is determined to match.

Other features and advantages of the disclosure will become apparent in the following detailed description of the embodiments with reference to the accompanying drawings, of which:
Figure 1 is a block diagram illustrating an embodiment of a notification system according to the disclosure;
Figure 2 is a flow chart illustrating a first embodiment of a notification method for battery pick-up according to the disclosure;
Figure 3 is a flow chart illustrating a second embodiment of the notification method for battery pick-up according to the disclosure;
Figure 4 is a flow chart illustrating a third embodiment of the notification method for battery pick-up according to the disclosure; and
Figure 5 is a flow chart illustrating a fourth embodiment of the notification method for battery pick-up according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

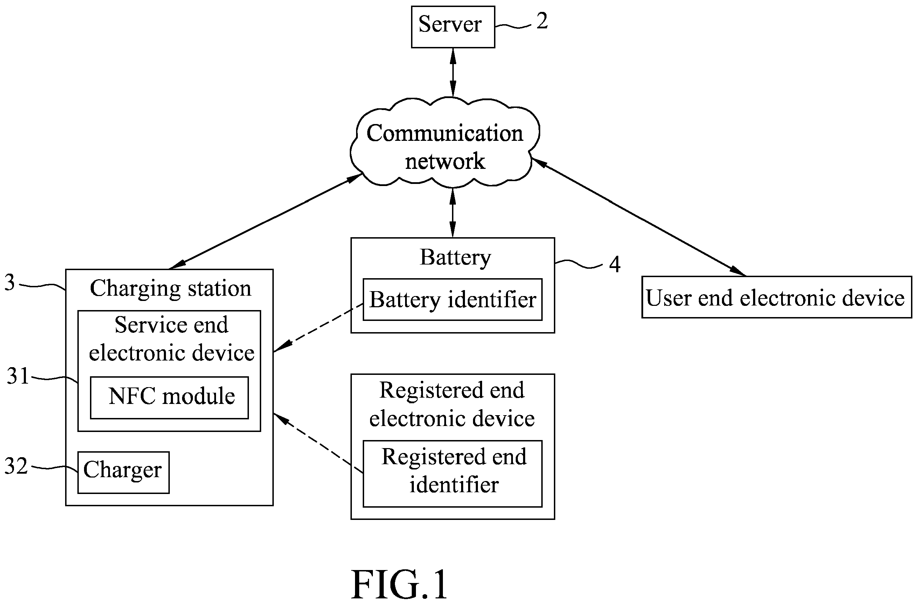

Referring to Figure 1, an embodiment of a notification system for battery pick-up according to the disclosure is illustrated. The notification system includes a server 2 and a charging station 3. The charging station 3 is communicable with the server 2 via a communication network. In this embodiment, the communication network is implemented to be the Internet.

The notification system is utilized in a scenario that when a battery 4 is brought to the charging station 3 by a user for battery charging, the notification system generates an electronic certificate for battery pick-up based on information associated with the battery 4 and the user, and issues (e.g., by broadcasting) the electronic certificate for battery pick-up via the communication network to the user. To pick up the battery 4, the user is requested to present the electronic certificate. When the electronic certificate has been verified, the battery 4 is allowed to be picked up by the user.

The charging station 3 is configured to detect a battery identifier of a battery 4 to be charged (hereinafter also referred to as a "concerned battery identifier"), and to transmit the concerned battery identifier to the server 2. The charging station 3 includes a service end electronic device 31 and a charger 32. In this embodiment, the service end electronic device 31 may be implemented to be a mobile device (e.g., a smartphone) or a tablet computer, but implementation of the service end electronic device 31 is not limited to the disclosure herein and may vary in other embodiments. The charger 32 functions as an electrical power supply device for charging the battery 4.

The server 2 is configured to store plural sets of reference battery data and a plurality of reference battery identifiers, each of which corresponds to a respective one of the plural sets of reference battery data. Each of the plural sets of reference battery data includes a user end target receiver code which indicates a target of notification transmission (i.e., a targeted recipient a notification shall be transmitted to). The server 2 is configured to determine one of the plural sets of reference battery data corresponding to one of the reference battery identifiers that matches the concerned battery identifier. The server 2 is configured to control the charging station 3 to charge the battery 4. The server 2 is configured to, when it is determined by the server 2 that the battery 4 has been fully charged, transmit a pick-up notification to the target of notification transmission that is indicated by the user end target receiver code of said one of the plural sets of reference battery data corresponding to said one of the reference battery identifiers with which the concerned battery identifiers is determined to match.

In this embodiment, the server 2 may be implemented to be a personal computer or a cloud host that is capable of communicating with the charging station 3 by means of WiFi or Bluetooth wireless communication technology for data transmission. However, implementation of the server 2 is not limited to the disclosure herein and may vary in other embodiments.

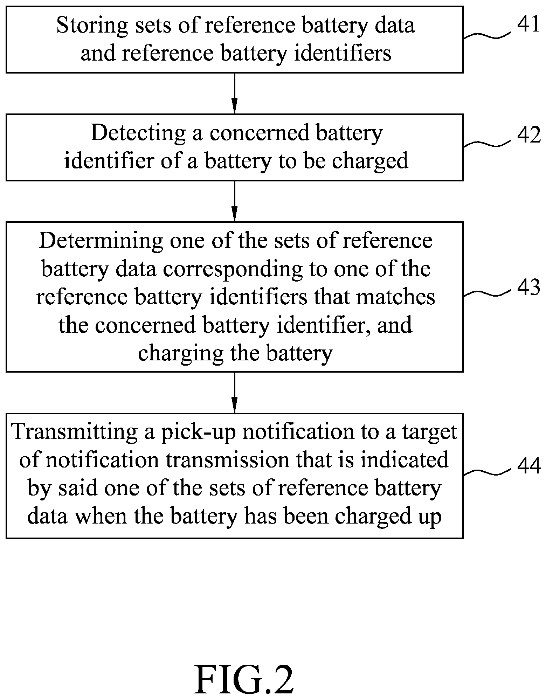

Referring to Figure 2, a first embodiment of a notification method for battery pick-up according to the disclosure is illustrated. The notification method is to be implemented by the embodiment of the notification system for battery pick-up that is previously described. The method includes steps 41 to 44 described as follows.

In step 41, the server 2 of the notification system stores the plural sets of reference battery data, and said plurality of reference battery identifiers corresponding respectively to the plural sets of reference battery data. In this embodiment, the reference battery identifiers and the concerned battery identifier are recorded on individual batteries by a vehicle manufacturer during the process of manufacturing the batteries, and are each formatted as a linear barcode or a matrix barcode, e.g., a Quick Response (QR) code. However, implementations of the reference battery identifiers and the concerned battery identifier are not limited to the disclosure herein and may vary in other embodiments.

In step 42, the charging station 3 of the notification system detects the concerned battery identifier of the battery 4, which is to be charged, by a near-field communication (NFC) module of the service end electronic device 31 of the charging station 3 based on NFC protocols. Thereafter, the service end electronic device 31 of the charging station 3 transmits the concerned battery identifier thus detected to the server 2.

In step 43, after receiving the concerned battery identifier transmitted by the service end electronic device 31 of the charging station 3 via the communication network, the server 2 of the notification system determines one of the plural sets of reference battery data corresponding to one of the reference battery identifiers that matches the concerned battery identifier, and transmits a charging instruction to the charger 32 of the charging station 3 so as to enable the charger 32 to charge the battery 4 based on the charging instruction.

In step 44, when the battery 4 is charged up by the charger 32, the charger 32 transmits an indication signal to the server 2. Based on the indication signal, it is determined by the server 2 of the notification system that the battery 4 has been fully charged, and the server 2 transmits the pick-up notification to the target of notification transmission that is indicated by the user end target receiver code of said one of the plural sets of reference battery data determined in step 43. In this embodiment, the target of notification transmission is implemented to be a mobile device that is capable of receiving data via the communication network and that belongs to (e.g., is owned, or carried/held by) a user of the battery 4 (or an owner of the battery 4). In this embodiment, the pick-up notification is implemented to be formatted as a linear barcode or a matrix barcode, e.g., a QR code. However, implementation of the pick-up notification is not limited to the disclosure herein and may vary in other embodiments.

In this way, without taking the initiative to inquire into the progress of battery charging, the user of the battery 4 is able to be notified by the pick-up notification that the battery 4 has been fully charged and is waiting to be picked up.

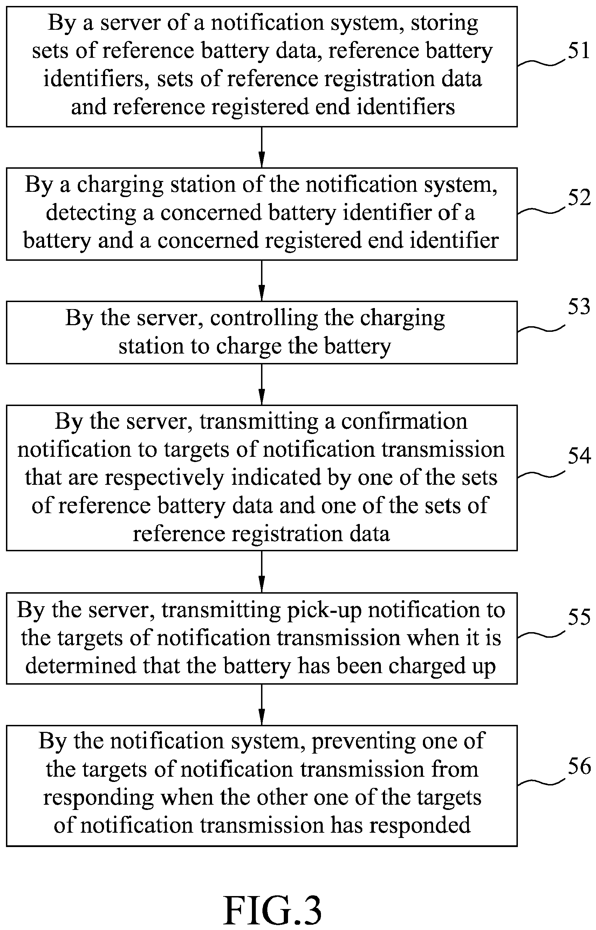

Referring to Figure 3, a second embodiment of the notification method for battery pick-up according to the disclosure is illustrated. The notification method is to be implemented by the embodiment of the notification system for battery pick-up that is previously described and shown in Figure 1. To implement the second embodiment of the notification method for battery pick-up, the notification system is further configured to store plural sets of reference registration data and a plurality of reference registered end identifiers, each of which corresponds to a respective one of the plural sets of reference registration data. Each of the plural sets of reference registration data includes a registered end target receiver code which indicates a target of notification transmission. In this embodiment, for each of the plural sets of reference battery data, the target of notification transmission indicated by the user end target receiver code is a user end electronic device, and for each of the plural sets of reference registration data, the target of notification transmission indicated by the registered end target receiver code is a registered end electronic device. However, implementations of the target of notification transmission indicated by the user end target receiver code and the target of notification transmission indicated by the registered end target receiver code are not limited to the disclosure herein and may vary in other embodiments. In this embodiment, the user end electronic device and the registered end electronic device are respectively exemplified by a mobile device that belongs to (e.g., is owned/carried by) the user of the battery 4 and a mobile device that belongs to a registered user who is registered on a registration website provided by the vehicle manufacturer and who is usually a third party. It should be noted that in this embodiment, the registered user is entrusted by the user of the battery 4 to assist in bringing the battery 4 to the charging station 3 for battery charging.

The method includes steps 51 to 56 described as follows.

In step 51, the server 2 of the notification system stores the plural sets of reference battery data, said plurality of reference battery identifiers, the plural sets of reference registration data and said plurality of reference registered end identifiers.

In step 52, the NFC module of the service end electronic device 31 of the charging station 3 of the notification system, based on NFC protocols, detects the concerned battery identifier of the battery 4 to be charged and a concerned registered end identifier. Thereafter, the service end electronic device 31 of the charging station 3 transmits the concerned battery identifier and the concerned registered end identifier to the server 2. Similar to the reference battery identifiers, each of the reference registered end identifiers and the concerned registered end identifier is implemented to be formatted as a linear barcode or a matrix barcode, e.g., a QR code, and is to be generated by the registration website on which the corresponding registered user made a registration. However, implementations of the reference registered end identifiers and the concerned registered end identifier are not limited to the disclosure herein and may vary in other embodiments.

In step 53, after receiving the concerned battery identifier and the concerned registered end identifier transmitted by the service end electronic device 31 of the charging station 3 via the communication network, the server 2 of the notification system determines one of the plural sets of reference battery data corresponding to one of the reference battery identifiers that matches the concerned battery identifier, and one of the plural sets of reference registration data corresponding to one of the reference registered end identifiers that matches the concerned registered end identifier. The server 2 transmits the charging instruction to the charger 32 of the charging station 3 so as to enable the charger 32 of the charging station 3 to charge the battery 4 based on the charging instruction.

In step 54, to notify the user of the battery 4 and the registered user who is entrusted to bring the battery 4 to the charging station 3, when step 53 is successfully executed, the server 2 of the notification system, based on said one of the plural sets of reference battery data thus determined and said one of the plural sets of reference registration data thus determined, transmits a confirmation notification to both the targets of notification transmission (i.e., the mobile device belonging to the user of the battery 4 and the mobile device belonging to the registered user) that are respectively indicated by the user end target receiver code included in said one of the plural sets of reference battery data and the registered end target receiver code included in said one of the plural sets of reference registration data.

In step 55, when the battery 4 is charged up by the charger 32, the charger 32 transmits the indication signal to the server 2. Based on the indication signal, it is determined by the server 2 that the battery 4 has been fully charged, and the server 2 transmits the pick-up notification to both the target of notification transmission that is indicated by the user end target receiver code of said one of the plural sets of reference battery data determined in step 53 and the target of notification transmission that is indicated by the registered end target receiver code included in said one of the plural sets of reference registration data determined in step 53, i.e., the mobile device that belongs to the user of the battery 4 and the mobile device that belongs to the registered user who is entrusted to bring the battery 4 to the charging station 3. In this way, the user of the battery 4 and the registered user can both be notified that the battery 4 has been fully charged and is ready for pick-up. In this embodiment, the pick-up notification is implemented to be formatted as a linear barcode or a matrix barcode, e.g., a Q.R code. However, implementation of the pick-up notification is not limited to the disclosure herein and may vary in other embodiments.

In step 56, to prevent repetition of battery pick-up with respect to the same battery 4, when one of the user end electronic device and the registered end electronic device, to which the pick-up notification was transmitted in step 55, has responded to the pick-up notification by being brought to the notification system (e.g., by providing the pick-up notification to the charging station 3 for a scan to obtain permission to pick up the battery 4), the notification system prevents the other one of the user end electronic device and the registered end electronic device from responding to the same pick-up notification by being brought to the notification system. In other words, permission for battery pick-up corresponding to the pick-up notification received by the other one of the user end electronic device and the registered end electronic device automatically ceases to be valid.

In this way, without inquiring about the progress of battery charging, the user of the battery 4 and the registered user who is entrusted to bring the battery 4 to the charging station 3 for battery charging are able to be notified by the pick-up notification that the battery 4 has been fully charged and is waiting to be picked up. Moreover, when one of the two users has picked up the battery, the pick-up notification corresponding to the other user automatically ceases to be valid so as to prevent repetition of battery pick-up.

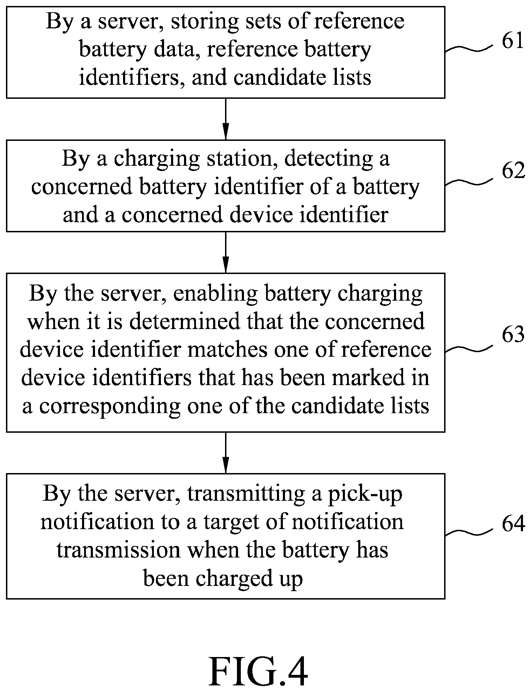

Referring to Figure 4, a third embodiment of the notification method for battery pick-up according to the disclosure is illustrated. The notification method is to be implemented by the embodiment of the notification system for battery pick-up that is previously described and shown in Figure 1. In addition, a plurality of user end electronic devices are communicable with the server 2 of the notification system via the communication network. Moreover, said plurality of user end electronic devices are communicable with a plurality of entrusted end electronic devices. In this embodiment, each of said plurality of user end electronic devices and said plurality of entrusted end electronic devices may be implemented to be a mobile device (e.g., a smartphone or a tablet computer), but implementations thereof are not limited to the disclosure herein and may vary in other embodiments. The server 2 is configured to further store a plurality of candidate lists that are respectively provided by the user end electronic devices. For each of the plural sets of reference battery data, the target of notification transmission indicated by the user end target receiver code is a respective one of the user end electronic devices. Each of the reference battery identifiers corresponds to a respective one of the candidate lists. Each of the candidate lists includes a plurality of reference device identifiers that correspond respectively to the entrusted end electronic devices. One of the user end electronic devices enables the server 2 to mark one of the reference device identifiers included in a corresponding one of the candidate lists provided by said one of the user end electronic devices.

The method includes steps 61 to 64 described as follows.

In step 61, the server 2 of the notification system stores the plural sets of reference battery data, said plurality of reference battery identifiers, and said plurality of candidate lists that are respectively transmitted by the user end electronic devices (i.e., the mobile devices) via the communication network. In this embodiment, each of the candidate lists is implemented to be a friend list supported by a customized mobile application, i.e., an application program (APP) that is developed by the vehicle manufacturer and that is installed on one of said plurality of user end electronic devices. In this embodiment, each of the entrusted end electronic devices is a mobile device of an entrusted user who is a friend of the user of the battery 4, who is recorded on the friend list established by the customized mobile application installed on the mobile device of the user of the battery 4, and who may be asked by the user of the battery 4 to bring the battery 4 to the charging station 3 for battery charging. That is to say, the entrusted end electronic device is the mobile device belonging to the entrusted user who was asked by the user of the battery 4 to bring the battery 4 to the charging station 3 and corresponds to the marked one of the reference device identifiers in the corresponding one of the candidate lists.

In step 62, the NFC module of the service end electronic device 31 of the charging station 3 detects the concerned battery identifier of the battery 4 and a concerned device identifier of one of the entrusted end electronic devices, and transmits the concerned battery identifier and the concerned device identifier to the server 2.

In step 63, when it is determined by the server 2 that the concerned device identifier matches said one of the reference device identifiers that has been marked and that the concerned battery identifier matches one of the reference battery identifiers, the server 2 transmits the charging instruction to the charger 32 of the charging station 3 so as to enable the charger 32 of the charging station 3 to charge the battery 4 based on the charging instruction.

In step 64, when the battery 4 is charged up by the charger 32, the charger 32 transmits the indication signal to the server 2. The server 2 determines that the battery 4 has been fully charged based on the indication signal, and transmits the pick-up notification to the target of notification transmission that is indicated by the user end target receiver code of one of the plural sets of reference battery data corresponding to said one of the reference battery identifiers that matches the concerned battery identifier. Therefore, the user of the battery 4 is capable of picking up the battery 4 with the pick-up notification received by a corresponding one of the user end electronic devices, i.e., the mobile device of the user of the battery 4.

In this way, the entrusted user is able to substitute for the user of the battery 4 in bringing the battery 4 to the charging station 3 for battery charging. Moreover, without inquiring into the progress of battery charging, the user of the battery 4 is able to be notified by the pick-up notification that the battery 4 has been fully charged and is waiting to be picked up.

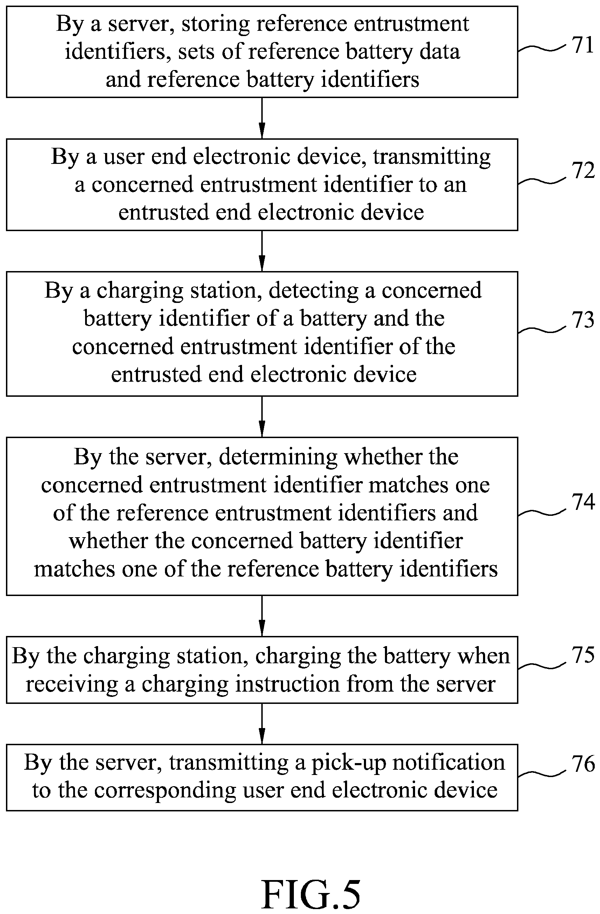

Referring to Figure 5, a fourth embodiment of the notification method for battery pick-up according to the disclosure is illustrated. The notification method is to be implemented by the embodiment of the notification system for battery pick-up that is previously described and is shown in Figure 1. For implementation of the fourth embodiment of the notification method for battery pick-up, the server 2 is configured to further store a plurality of reference entrustment identifiers. Each of said plurality of reference battery identifiers corresponds to a respective one of the plural sets of reference battery data and to a respective one of the reference entrustment identifiers. Each of the plural sets of reference battery data includes a user end target receiver code which indicates a user end electronic device as a target of notification transmission.

The method includes steps 71 to 76 described as follows.

In step 71, the server 2 of the notification system stores the plurality of reference entrustment identifiers, the plural sets of reference battery data, and said plurality of reference battery identifiers that correspond respectively to the plural sets of reference battery data and that correspond respectively to said plurality of reference entrustment identifiers.

In step 72, the user end electronic device of the user of the battery 4 generates a concerned entrustment identifier, and transmits the concerned entrustment identifier to an entrusted end electronic device by means of Short Message Service (SMS) for identification of an entrusted user of the entrusted end electronic device. It should be noted that in this embodiment, the entrusted user of the entrusted end electronic device is entrusted by the user of the battery 4 to assist in bringing the battery 4 to the charging station 3 for battery charging. In this embodiment, each of the user end electronic device of the user of the battery 4 and the entrusted end electronic device is implemented to be a mobile device (e.g., a smartphone or a tablet computer), but implementations thereof are not limited to the disclosure herein and may vary in other embodiments. In this embodiment, the concerned entrustment identifier is implemented to be generated by executing a customized mobile application that is developed by the vehicle manufacturer and that is installed on the user end electronic device, based on an entry of concerned entrustment data recorded in the customized mobile application. Similar to the reference battery identifiers, each of the reference entrustment identifiers and the concerned entrustment identifier is implemented to be formatted as a linear barcode or a matrix barcode, e.g., a QR code. However, implementations of the reference entrustment identifiers and the concerned entrustment identifier are not limited to the disclosure herein and may vary in other embodiments. In addition, implementation of the transmitting the concerned entrustment identifier to an entrusted end electronic device is not limited to the disclosure herein, and may vary in other embodiments. For example, the concerned entrustment identifier may be transmitted to the entrusted end electronic device by means of push technology via the communication network as long as the entrusted end electronic device is installed with the customized mobile application.

In step 73, when the entrusted user brings the battery 4 to the charging station 3 of the notification system for battery charging, the charging station 3, by the NFC module of the service end electronic device 31 of the charging station 3 based on NFC protocols, detects the concerned battery identifier of the battery 4 to be charged and the concerned entrustment identifier of the entrusted end electronic device. Thereafter, the service end electronic device 31 of the charging station 3 transmits the concerned battery identifier and the concerned entrustment identifier to the server 2. As what is previously mentioned, the concerned battery identifier of the battery 4 is implemented to be recorded on the battery 4 by the vehicle manufacturer during the process of manufacturing the battery 4, and is to be formatted as a linear barcode or a matrix barcode, e.g., a QR code.

In step 74, the server 2 determines whether the concerned entrustment identifier matches one of the reference entrustment identifiers stored in the server 2 and whether the concerned battery identifier matches one of the reference battery identifiers stored in the server 2. When it is determined by the server 2 that the concerned entrustment identifier matches one of the reference entrustment identifiers stored in the server 2 and that the concerned battery identifier matches one of the reference battery identifiers stored in the server 2, a flow of procedure proceeds to step 75.

In step 75, the server 2 transmits a charging instruction to the charger 32 of the charging station 3 so as to enable the charger 32 of the charging station 3 to charge the battery 4.

In step 76, when it is determined by the server 2 that the battery 4 has been fully charged, the server 2 transmits the pick-up notification to the user end electronic device that is indicated by the user end target receiver code of one of the plural sets of reference battery data corresponding to said one of the reference battery identifiers with which the concerned battery identifier is determined to match in step 74. Consequently, the user of the battery 4 is notified to pick up the battery 4.

In summary, the notification method according to the disclosure utilizes the notification system to detect at least one of a concerned battery identifier of a battery to be charged and an identifier related to a third party who is entrusted to bring the battery to the charging station, and to charge the battery. When it is determined that the battery has been charged up, the notification method utilizes the notification system to transmit a pick-up notification to the mobile device of the user of the battery. Therefore, the user of the battery can be notified to pick up the battery, saving effort of inquiry.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A notification method for battery pick-up, to be implemented by a notification system for battery pick-up, the notification system storing plural sets of reference battery data and a plurality of reference battery identifiers, each of which corresponds to a respective one of the plural sets of reference battery data, each of the plural sets of reference battery data including a user end target receiver code which indicates a target of notification transmission, the notification method **characterized by**:
A) detecting, by the notification system, a concerned battery identifier of a battery (4) to be charged;
B) by the notification system, determining one of the plural sets of reference battery data corresponding to one of the reference battery identifiers that matches the concerned battery identifier, and charging the battery (4); and
C) transmitting, by the notification system when it is determined that the battery (4) has been fully charged, a pick-up notification to the target of notification transmission that is indicated by the user end target receiver code of said one of the plural sets of reference battery data determined in step B).

2. The notification method as claimed in claim 1, the notification system further storing plural sets of reference registration data and a plurality of reference registered end identifiers, each of which corresponds to a respective one of the plural sets of reference registration data, each of the plural sets of reference registration data including a registered end target receiver code which indicates a target of notification transmission, the notification method **characterized in that**:
step A) includes detecting, by the notification system, a concerned registered end identifier;
step B) includes determining, by the notification system, one of the plural sets of reference registration data corresponding to one of the reference registered end identifiers that matches the concerned registered end identifier; and
subsequent to step B), the notification method further **characterized by**:
D) transmitting, by the notification system, based on said one of the plural sets of reference battery data thus determined and said one of the plural sets of reference registration data thus determined, a confirmation notification to both the targets of notification transmission that are respectively indicated by the user end target receiver code included in said one of the plural sets of reference battery data and the registered end target receiver code included in said one of the plural sets of reference registration data.

3. The notification method as claimed in claim 2, **characterized in that** step C) includes transmitting, by the notification system when it is determined that the battery (4) has been fully charged, the pick-up notification to the target of notification transmission that is indicated by the registered end target receiver code included in said one of the plural sets of reference registration data determined in step B).

4. The notification method as claimed in claim 3, for each of the plural sets of reference battery data, the target of notification transmission indicated by the user end target receiver code being a user end electronic device, and for each of the plural sets of reference registration data, the target of notification transmission indicated by the registered end target receiver code being a registered end electronic device, the notification method further **characterized by**:
E) by the notification system, when one of the user end electronic device and the registered end electronic device, to which the pick-up notification was transmitted in step C), has responded to the pick-up notification by being brought to the notification system, preventing the other one of the user end electronic device and the registered end electronic device from responding to the pick-up notification by being brought to the notification system.

5. The notification method as claimed in claim 1, the notification system including a server (2), a charging station (3) communicable with the server (2) via a communication network, a plurality of user end electronic devices communicable with the server (2) via the communication network, and a plurality of entrusted end electronic devices communicable with the user end electronic devices via the communication network, the server (2) storing the plural sets of reference battery data, the reference battery identifiers, and a plurality of candidate lists that are respectively provided by the user end electronic devices; for each of the plural sets of reference battery data, the target of notification transmission indicated by the user end target receiver code being a respective one of the user end electronic devices; each of the reference battery identifiers corresponding to a respective one of the candidate lists; each of the candidate lists including a plurality of reference device identifiers that correspond respectively to the entrusted end electronic devices; one of the user end electronic devices enabling the server (2) to mark one of the reference device identifiers included in a corresponding one of the candidate lists; the notification method **characterized in that**:
step A) includes, by the charging station (3), detecting the concerned battery identifier of the battery (4) and a concerned device identifier of one of the entrusted end electronic devices, and transmitting the concerned battery identifier and the concerned device identifier to the server (2);
step B) includes, by the server (2) when it is determined that the concerned device identifier matches said one of the reference device identifiers that has been marked, transmitting a charging instruction to the charging station (3) so as to enable the charging station (3) to charge the battery (4); and
step C) includes transmitting, by the server (2) when it is determined by the server (2) that the battery (4) has been fully charged, the pick-up notification to the target of notification transmission that is indicated by the user end target receiver code of said one of the plural sets of reference battery data determined in step B).

6. A notification method for battery pick-up, to be implemented by a notification system for battery pick-up, the notification system including a server (2) and a charging station (3) communicable with the server (2) via a communication network, the server (2) storing plural sets of reference battery data, a plurality of reference entrustment identifiers, and a plurality of reference battery identifiers, each of which corresponds to a respective one of the plural sets of reference battery data and to a respective one of the reference entrustment identifiers, each of the plural sets of reference battery data including a user end target receiver code which indicates a user end electronic device as a target of notification transmission, the notification method **characterized by**:
by the user end electronic device, transmitting a concerned entrustment identifier to an entrusted end electronic device;
by the charging station (3), detecting a concerned battery identifier of a battery (4) to be charged and the concerned entrustment identifier of the entrusted end electronic device, and transmitting the concerned battery identifier and the concerned entrustment identifier to the server (2);
by the server (2), determining whether the concerned entrustment identifier matches one of the reference entrustment identifiers stored in the server (2) and whether the concerned battery identifier matches one of the reference battery identifiers stored in the server (2);
by the server (2), transmitting, when it is determined that the concerned entrustment identifier matches one of the reference entrustment identifiers and that the concerned battery identifier matches one of the reference battery identifiers, a charging instruction to the charging station (3) so as to enable the charging station (3) to charge the battery (4); and
by the server (2), transmitting, when it is determined by the server (2) that the battery (4) has been fully charged, a pick-up notification to the user end electronic device that is indicated by the user end target receiver code of one of the plural sets of reference battery data corresponding to said one of the reference battery identifiers with which the concerned battery identifier is determined to match.

7. A notification system for battery pick-up, said notification system **characterized by**:
a server (2) configured to store plural sets of reference battery data and a plurality of reference battery identifiers, each of which corresponds to a respective one of the plural sets of reference battery data, each of the plural sets of reference battery data including a user end target receiver code which indicates a target of notification transmission; and
a charging station (3) communicable with said server (2) via a communication network, and configured to detect a concerned battery identifier of a battery (4) to be charged, and to transmit the concerned battery identifier to said server (2),
wherein said server (2) is configured to determine one of the plural sets of reference battery data corresponding to one of the reference battery identifiers that matches the concerned battery identifier, to control said charging station (3) to charge the battery (4), and to transmit, when it is determined by said server (2) that the battery (4) has been fully charged, a pick-up notification to the target of notification transmission that is indicated by the user end target receiver code of said one of the plural sets of reference battery data corresponding to said one of the reference battery identifiers with which the concerned battery identifiers is determined to match.

8. A notification system for battery pick-up, said notification system **characterized by**:
a server (2) configured to store plural sets of reference battery data, a plurality of reference battery identifiers, plural sets of reference registration data and a plurality of reference registered end identifiers, each of said plurality of reference battery identifiers corresponding to a respective one of the plural sets of reference battery data, each of the plural sets of reference battery data including a user end target receiver code which indicates a target of notification transmission, each of said plurality of reference registered end identifiers corresponds to a respective one of the plural sets of reference registration data, each of the plural sets of reference registration data including a registered end target receiver code which indicates a target of notification transmission; and
a charging station (3) communicable with said server (2) via a communication network, and configured to detect a concerned battery identifier of a battery (4) to be charged and a concerned registered end identifier, and to transmit the concerned battery identifier and the concerned registered end identifier to said server (2),
wherein said server (2) is configured
to determine one of the plural sets of reference battery data corresponding to one of the reference battery identifiers that matches the concerned battery identifier, and one of the plural sets of reference registration data corresponding to one of the reference registered end identifiers that matches the concerned registered end identifier,
based on said one of the plural sets of reference battery data thus determined and said one of the plural sets of reference registration data thus determined, to control said charging station (3) to charge the battery (4), and
to transmit, based on said one of the plural sets of reference battery data thus determined and said one of the plural sets of reference registration data thus determined, a confirmation notification to the targets of notification transmission that are respectively indicated by the user end target receiver code included in said one of the plural sets of reference battery data and the registered end target receiver code included in said one of the plural sets of reference registration data.

9. The notification system as claimed in claim 8, **characterized in that** said server (2) is configured to transmit, when it is determined by said charging station (3) that the battery (4) has been fully charged, a pick-up notification to the targets of notification transmission that are respectively indicated by the user end target receiver code included in said one of the plural sets of reference battery data and the registered end target receiver code included in said one of the plural sets of reference registration data.

10. The notification system as claimed in claim 9, **characterized in that**:
for each of the plural sets of reference battery data, the target of notification transmission indicated by the user end target receiver code is a user end electronic device;
for each of the plural sets of reference registration data, the target of notification transmission indicated by the registered end target receiver code is a registered end electronic device; and
said notification system is configured to, when one of the user end electronic device and the registered end electronic device, to which the pick-up notification was transmitted, has responded to the pick-up notification by being brought to said notification system, prevent the other one of the user end electronic device and the registered end electronic device from responding to the pick-up notification by being brought to said notification system.

11. A notification system for battery pick-up, said notification system **characterized by**:
a server (2) communicable with a plurality of user end electronic devices via a communication network, and configured to store plural sets of reference battery data, a plurality of reference battery identifiers, and a plurality of candidate lists that are respectively provided by the user end electronic devices, each of said plurality of reference battery identifiers corresponding to a respective one of the plural sets of reference battery data, each of the plural sets of reference battery data including a user end target receiver code which indicates a target of notification transmission that is a respective one of the user end electronic devices, each of the reference battery identifiers corresponding to a respective one of the candidate lists, each of the candidate lists including a plurality of reference device identifiers that correspond respectively to entrusted end electronic devices, one of the user end electronic devices enabling said server (2) to mark one of the reference device identifiers included in a corresponding one of the candidate lists; and
a charging station (3) communicable with said server (2) via the communication network, and configured to detect a concerned battery identifier of a battery (4) to be charged and a concerned device identifier of one of the entrusted end electronic devices, and to transmit the concerned battery identifier and the concerned device identifier to said server (2),
wherein said server (2) is configured
to determine one of the reference device identifiers that has been marked and that matches the concerned device identifier,
to transmit a charging instruction to said charging station (3) so as to enable said charging station (3) to charge the battery (4), and
to transmit, when it is determined by said server (2) that the battery (4) has been fully charged, a pick-up notification to the target of notification transmission that is indicated by the user end target receiver code of one of the plural sets of reference battery data corresponding to one of the reference battery identifiers with which the concerned battery identifiers matches.

12. A notification system for battery pick-up, said notification system **characterized by**:
a server (2) configured to store plural sets of reference battery data, a plurality of reference entrustment identifiers, and a plurality of reference battery identifiers, each of which corresponds to a respective one of the plural sets of reference battery data and to a respective one of the reference entrustment identifiers, each of the plural sets of reference battery data including a user end target receiver code which indicates a user end electronic device as a target of notification transmission, the user end electronic device transmitting a concerned entrustment identifier to an entrusted end electronic device; and
a charging station (3) communicable with said server (2) via a communication network, and configured to detect a concerned battery identifier of a battery (4) to be charged and the concerned entrustment identifier of the entrusted end electronic device, and to transmit the concerned battery identifier and the concerned entrustment identifier to said server (2),
wherein said server (2) is further configured
to determine whether the concerned entrustment identifier matches one of the reference entrustment identifiers stored in said server (2) and whether the concerned battery identifier matches one of the reference battery identifiers stored in said server (2),
to transmit, when it is determined by said server (2) that the concerned entrustment identifier matches one of the reference entrustment identifiers and that the concerned battery identifier matches one of the reference battery identifiers, a charging instruction to said charging station (3) so as to enable said charging station (3) to charge the battery (4), and
to transmit, when it is determined by said server (2) that the battery (4) has been fully charged, a pick-up notification to the user end electronic device that is indicated by the user end target receiver code of one of the plural sets of reference battery data corresponding to said one of the reference battery identifiers with which the concerned battery identifier is determined to match.
